# EUROPEAN PATENT APPLICATION

(11) **EP 4 685 877 A1**
(43) Date of publication of application: **28.01.2026**
(21) Application number: 24739073.5
(22) Date of filing: 19.06.2024
(51) Int. Cl.: H01M 4/505, H01M 4/525

(54) **NICKEL-MANGANESE-BASED SODIUM-ION BATTERY POSITIVE ELECTRODE MATERIAL AND PREPARATION METHOD THEREFOR, AND POSITIVE ELECTRODE SHEET AND SODIUM-ION BATTERY**

(30) Priority: 06.06.2024 CN 202410732373
(71) Applicant: Hubei Wanrun New Energy Technology Co., Ltd., Shiyan, Hubei 442500 (CN)
(72) Inventor: LIU, Shiqi, Shiyan, Hubei 442500 (CN); SU, Xin, Shiyan, Hubei 442500 (CN); WANG, Kunfang, Shiyan, Hubei 442500 (CN); LV, Fei, Shiyan, Hubei 442500 (CN); PENG, Tangping, Shiyan, Hubei 442500 (CN); XU, Ruiling, Shiyan, Hubei 442500 (CN)
(74) Representative: Barker Brettell LLP
(86) International application number: PCT/CN2024/100180
(87) International publication number: WO 2025/251350

(57) **Abstract**

The present disclosure relates to a nickel-manganese-based sodium ion battery cathode material and a preparation method thereof, a cathode sheet as well as a sodium ion battery, which belongs to the technical field of secondary batteries. Wherein, the nickel-manganese-based sodium ion battery cathode material is represented by a general formula of Na_{c}NiₐMn_{b}O₂, where, a+b=1.0, 0.4≤a≤0.6, 0.4≤b≤0.6, 0.67≤c≤1.0; the nickel-manganese-based sodium ion battery cathode material is secondary particles formed of the stacking of primary particles, wherein the primary particles are sheet-like particles, and the secondary particles are spherical particles, and it has a specific discharge capacity of ≥115 mAh•g⁻¹.The sodium ion battery prepared from the nickel-manganese-based sodium ion battery cathode material provided in this disclosure has a good cycle life and energy density, which helps to broaden the application fields of sodium ion batteries.

## Description

### Cross-Reference to Related Application

This application claims the priority for Chinese Patent Application 202410732373.1, with a filing date of June 6, 2024. The aforementioned Chinese Patent Application is incorporated into this application in its entirety.

### Technical Field

This disclosure relates to the technical field of secondary batteries, specifically to a nickel-manganese-based sodium ion battery cathode material and a preparation method thereof, a cathode sheet as well as a sodium ion battery.

### Background

Lithium ion batteries have good electrical performance and have been widely used in the field of energy storage. However, with the development of economy, the consumption of lithium resources has increased, and their reserves are low distributions are uneven, and their prices fluctuate greatly. Therefore, there is an urgent need to find an alternative to lithium ion batteries.

Compared to lithium resources, sodium resources are widely distributed and have higher reserves in the Earth's crust. The content of sodium element in the Earth's crust is about 422 times that of lithium element, making sodium ion batteries more cost-effective, and they are expected to be widely applied in the field of energy storage. Sodium ion batteries and lithium ion batteries have similar working principles, i.e. utilizing the de-intercalation and intercalation processes of sodium ions between the cathodes and anodes to achieve the storage and release of energy. At present, there are three main types of sodium ion battery cathode materials, i.e. layered transition metal oxides, polyanionic compounds, and Prussian blue analogues. Among them, the layered transition metal oxide cathode materials have the highest capacity and have similar preparation process to lithium ion battery ternary cathode materials, attracting more and more researches and attentions.

However, at present, the layered transition metal oxides generally have short cycle life, and due to the sodium ions have larger ion radius and slower kinetic rate, their charge-discharge deintercalation is difficult. In addition, the compaction density of the layered transition metal oxide cathode materials is generally low, which seriously affects the volumetric energy density of the material and becomes the main factor restricting their development.

### Summary

In view of the technical problems existing in the background art, this disclosure provides a nickel-manganese-based sodium ion battery cathode material and a preparation method thereof, a cathode sheet as well as a sodium ion battery, aiming to solve the problems of short cycle life and low energy density of sodium ion batteries in the prior art.

In a first aspect, the embodiments of this disclosure provide a nickel-manganese-based sodium ion battery cathode material, wherein, it is represented by a general formula of Na_{c}NiₐMn_{b}O₂, where, a+b=1.0, 0.4≤a≤0.6, 0.4≤b≤0.6, 0.67≤c≤1.0; the above nickel-manganese-based sodium ion battery cathode material is secondary particles formed of the stacking of primary particles, wherein the primary particles are sheet-like particles, and the secondary particles are spherical particles; and the nickel-manganese-based sodium ion battery cathode material has a specific discharge capacity of ≥115 mAh•g⁻¹.

In the technical solutions of the embodiments of this disclosure, the nickel-manganese-based sodium ion battery cathode material can provide more abundant sodium ion active sites, alleviating the structural changes caused by repeated intercalation and de-intercalation of sodium ions. By selecting its structure and stoichiometric ratio, the nickel-manganese-based sodium ion battery cathode material can have both good cycle performance and energy density.

In some embodiments, the primary particles have a size to thickness ratio of (2.5-15): 1, and a sheet thickness of 0.1 µm to 1 µm; and/or the D₅₀ particle size of the secondary particles is 3 µm to 5.5 µm.

In these embodiments, by limiting the D₅₀ particle size of the secondary particles, the specific surface area of the nickel-manganese-based sodium ion battery cathode material becomes relatively high, which is conducive to increasing its contact area with the electrolyte, improving the ion transport rate, and is also conducive to reducing the electron transport path among particles. In addition, by limiting the size to thickness ratio and sheet thickness of the primary particles, they will have relatively more active sites, which helps to further improve the ion deintercalation rate and can alleviate the structural changes caused by repeated deintercalation of sodium ions, improving its cycle life.

In some embodiments, the specific surface area of the nickel-manganese-based sodium ion battery cathode material is 35 m²/g to 80 m²/g.

In these embodiments, the specific surface area of the nickel-manganese-based sodium ion battery cathode material can be up to 35 m²/g to 80 m²/g, making the nickel-manganese-based sodium ion battery cathode material more sufficiently contact with the electrolyte, which helps to improve its energy density.

In a second aspect, the embodiments of this disclosure provide a preparation method of a nickel-manganese-based sodium ion battery cathode material, comprising the following steps:
mixing a first complexing agent, a first alkaline substance and water to prepare a mixed solution, wherein the mixed solution is an aqueous solution having an alkalinity of 40 mmol/L to 60 mmol/L and a pH value of 10 to 11;
adding a nickel salt, a manganese salt, a second complexing agent, and a second alkaline substance to above mixed solution for a first coprecipitation reaction, controlling an alkalinity of the reaction system for the first coprecipitation reaction to be 40 mmol/L to 60 mmol/L, and a **pH** value to be 10 to 11, thereby obtaining a first reaction slurry;
adding a second complexing agent and a second alkaline substance to the first reaction slurry, adjusting an alkalinity of the first reaction slurry to be 60 mmol/L to 100 mmol/L and a **pH** value to be 11 to 12 for a second coprecipitation reaction, controlling an alkalinity of the reaction system of the second coprecipitation reaction to be 60 mmol/L to 100 mmol/L and **a pH** value to be 11 to 12, thereby obtaining the nickel-manganese-layered hydroxide precursor;
mixing and calcining the nickel-manganese-layered hydroxide precursor with a sodium source to obtain the nickel-manganese-based sodium ion battery cathode material;
wherein, the alkalinity of the reaction system of the first coprecipitation reaction is lower than that of the reaction system of the second coprecipitation reaction, the pH value of the reaction system of the first coprecipitation reaction is lower than that of the reaction system of the second coprecipitation reaction, and the reaction time of the first coprecipitation reaction is 10 to 40 minutes, and the reaction time of the second coprecipitation reaction is 24 to 48 hours.

In these embodiments, the nucleation and growth processes of precursor are regulated by changing the solution environment during these coprecipitation reactions, which in turn affect the growth orientation of primary particles and the stacking mode of secondary particles, forming spherical secondary particles by the stacking of sheet-like primary particles, and improving the cycle performance and energy density of the nickel-manganese-based sodium ion battery cathode material.

In some embodiments, a reaction temperature of the first coprecipitation reaction and the second coprecipitation reactions are 30 °C to 60 °C.

In these embodiments, by controlling the reaction temperature, the reaction can proceed quickly and smoothly.

In some embodiments, the first coprecipitation reaction and the second coprecipitation reaction are carried out under a stirring condition of 400 rpm to 1000 rpm.

In these embodiments, reactions can be carried out more completely by stirring, and the generated products can be made more uniform.

In some embodiments, conditions of the calcination are as follows: heating to 400 °C-600 °C and holding for 4 hours to 6 hours, then heating to 700 °C-900 °C and holding for 10 hours to 25 hours.

In these embodiments, by stepwise calcining, the heat treatment process can be carried out more completely, and the structure of the nickel-manganese-based sodium ion battery cathode material is more complete and has higher uniformity, which helps to improve the electrochemical performance of the cathode material.

In some embodiments, the nickel salt is at least one of nickel sulfate, nickel nitrate, and nickel chloride; and/or, the manganese salt is at least one of manganese sulfate, manganese nitrate, and manganese chloride; and/or, the first and the second complexing agents are each independently at least one of ammonia, nitrilotriacetic acid, and ethylenediamine tetraacetic acid; and/or, the first and the second alkaline substances are each independently at least one of sodium hydroxide, and potassium hydroxide; and/or, the sodium source is at least one of sodium hydroxide, sodium carbonate, and sodium nitrate.

In these embodiments, the nickel salt, manganese salt, complexing agents, alkaline substances, and sodium source are commonly used raw materials in the art, and have a wide range of sources and low prices, which is conducive to industrial production.

In some embodiments, a mole ratio of nickel element to manganese element in the nickel salt and the manganese salt is (4-6): (4-6); and/or, a mole ratio of sum of nickel element and manganese element in the nickel-manganese-layered hydroxide precursor to sodium element in the sodium source is 1: (0.67-1.05).

In these embodiments, the nickel element functions to provide the skeleton in the nickel-manganese-based sodium ion battery cathode material. If the proportion of nickel element is too small, its cycle stability will deteriorate, otherwise, if the proportion of nickel element is too high, its cost will increase. The above limitations on the mole ratio of nickel element to manganese element are made, on the one hand, it can improve the cycle stability of the batteries, and on the other hand, it can control the costs and expand the application range thereof. The above limitations on the mole ratio of sum of nickel element and manganese element to sodium element are made, this is because if the proportion of sodium element is too low, the content of sodium ions to be provided will decrease, and the specific charge and discharge capacity of the battery will decrease; however, if the proportion of sodium element is too high, it will produce more impurity phases, which will affect the capacity, and more residual alkali will also affect the processing performance of the cathode sheet. Therefore, by making the above limitations on the mole ratio of the above elements, the batteries can have higher energy density and processing performance.

In some embodiments, the first and the second complexing agents are ammonia, and the first and the second alkaline substances are sodium hydroxide; furthermore, the step of adding a nickel salt, a manganese salt, a second complexing agent, and a second alkaline substance to the mixed solution for a first coprecipitation reaction to obtain a first reaction slurry comprises:
mixing the nickel salt and the manganese salt with water to obtain a nickel-manganese binary salt solution, mixing the second complexing agent with water to obtain a complexing agent solution, and mixing the second alkaline substance with water to obtain an alkaline solution;
adding the above nickel-manganese binary salt solution, the complexing agent solution, and the alkaline solution to the mixed solution for a first coprecipitation reaction to obtain a first reaction slurry;
wherein, a solubility of metal ions in the nickel-manganese binary salt solution is 1.5 mol/L to 2.5 mol/L; a concentration of NH₃•H₂O in the complexing agent solution is 2 mol/L to 6 mol/L; and a concentration of alkaline substances in the alkaline solution is 3 mol/L to 5 mol/L.

In addition, in the mixed solution, the volume ratio of ammonia to water is 1: (3-13); the ammonia is concentrated ammonia, wherein the mass fraction of NH₃•H₂O is 25% to 28%.

In these embodiments, the above limitations on the usage amount of ammonia are made so as to facilitate the preparation of an aqueous solution with an alkalinity of 40 to 60 and a pH value of 10 to 11. The above limitations on the concentrations of nickel and manganese, NH₃•H₂O, and alkali in the nickel-manganese binary salt solution are made so as to facilitate the control of reaction rate and the preparation of the nickel-manganese-based sodium ion battery cathode material with complete structure and uniform size subsequently.

In some embodiments, during the first coprecipitation reaction, an addition rate of the alkaline solution is 0.1 mL/min to 0.4 mL/min, and an addition rate of the complexing agent solution is 0.2 mL/min to 0.4 mL/min;
during the second coprecipitation reaction, an addition rate of the alkaline solution is 0.4 mL/min to 0.6 mL/min, and an addition rate of the complexing agent solution is 0.4 mL/min to 0.8 mL/min; and
during the first and the second coprecipitation reactions, an addition rate of the nicke-manganese binary salt solution is 0.3 mL/min to 1 mL/min.

In these embodiments, by limiting the addition rate of multiple solutions, the alkalinity during the first coprecipitation reaction can be maintained at 40 mmol/L to 60 mmol/L, and the pH value can be maintained at 10 to 11; the alkalinity during the second coprecipitation reaction can be maintained at 60 mmol/L to 80 mmol/L, and the pH value can be maintained at 11 to 12; during the above first coprecipitation reaction, the precursor is still in the nucleation stage and grows along the crystal plane (010), which is conducive to the formation of sheet-like crystal nuclei; and during the above second coprecipitation reaction, the precursor is in the growth stage, which can make the crystal nuclei stack along the direction of the crystal plane (101), forming the spherical secondary particles by the stacking of the sheet-like primary particles, which is conducive to the transport of sodium ions.

In a third aspect, the embodiments of this disclosure provide a cathode sheet comprising a current collector and a cathode material located at one or both sides of the current collector, a conductive agent, and a binder, and the cathode material is the nickel-manganese-based sodium ion battery cathode material as described in the first aspect of this disclosure, which has good electrochemical performance.

In a fourth aspect, the embodiments of this disclosure provide a sodium ion battery comprising the cathode sheet as described in the third aspect of this disclosure, and thus it has good cycle performance and energy density.

The above descriptions are only an overview of the technical solutions of this disclosure.

In order to have a clearer understanding of the technical means of this disclosure, and implement same according to the contents of the specification and in order to make the above and other purposes, features, and advantages of this disclosure more obvious and easy to understand, the specific embodiments of this disclosure are specifically listed below.

### Brief Description of the Drawings

In order to provide a clearer explanation of the technical solutions of this disclosure, a brief introduction will be given below to the accompanying drawings used in this disclosure. It is obvious that the accompanying drawings described below are only some embodiments of this disclosure. For those ordinarily skilled in the art, other drawings can also be obtained based on these accompanying drawings without creative labor.
Figure 1 is a scanning electron microscope image of the nickel-manganese-layered hydroxide in embodiment 1 of this disclosure;
Figure 2 is a scanning electron microscope image of the nickel-manganese-based sodium ion battery cathode material in embodiment 1 of this disclosure;
Figure 3 is an XRD pattern of the nickel-manganese-based sodium ion battery cathode material in embodiment 1 of this disclosure;
Figure 4 is a diagram of the initial specific charge-discharge capacity testing of the nickel-manganese-based sodium ion battery cathode material in embodiment 1 of this disclosure; and
Figure 5 is a diagram of the cycle performance testing of the nickel-manganese-based sodium ion battery cathode material in embodiment 1 of this disclosure.

### Detailed Description of the Embodiments

The embodiments of the technical solutions of this disclosure will be described in detail below in conjunction with the accompanying drawings. The following embodiments are only intended to provide a clearer explanation of the technical solutions of this disclosure, and therefore they are only used as embodiments rather than limitations to the scope of protection of this disclosure.

Unless otherwise defined, all technical and scientific terms as used herein have the same meanings as those commonly understood by those skilled in the technical field of this disclosure; the terms as used herein are only intended for the purpose of describing specific embodiments rather than limiting this disclosure; and the terms "including" and "having" in the description and claims, as well as the accompanying drawings of this disclosure, and any variations thereof, are intended to cover non-exclusive inclusion.

In the description of embodiments of this disclosure, the technical terms "first" and "second", etc., are only used to distinguish different objects and cannot be understood as indicating or implying relative importance or implicitly indicating the number, specific order or primary and secondary relationships of the indicated technical features. In the description of the embodiments of this disclosure, "multiple" means more than two, unless otherwise specifically defined explicitly.

Reference to "embodiments" herein means that specific features, structures, or characteristics described in combination with embodiments may be included in at least one embodiment of this disclosure. The phrase appearing at various positions in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the description of the embodiments of this disclosure, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the embodiments of this disclosure, the term "multiple" refers to more than two (including two), similarly, "multiple groups" refers to more than two groups (including two groups), and "multiple sheets" refers to more than two sheets (including two sheets).

In the description of the embodiments of this disclosure, if the orientation and position relationships indicated by the technical terms "centre", "lengthwise", "crosswise", "length", "width", "thickness", "up", "down", "front", "back", "left", "right", "vertical", "horizontal", "top", "bottom", "inside", "outside", "clockwise", "counterclockwise", "axial", "radial" and "circumferential", etc., are based on the orientation or position relationship as shown in the accompanying drawings, it is only for the convenience of describing the embodiments of this disclosure and simplifying the description, rather than indicating or implying that the device or element referred to thereby must have a specific orientation and be constructed and operated in a specific orientation, and thus it cannot be understood as limitations on the embodiments of this disclosure.

In the description of the embodiments of this disclosure, unless otherwise specified and limited, the terms "installation", "interconnection", "connection", "fixation", and the like should be understood in a broad sense, for example, it can be either fixed connection, or detachable connection, or integrated connection; it can also be either mechanical connection or electrical connection; and it can be either direct connection, or indirect connection through intermediate media, or it can be the interior communication between two components or the interactive relationship between two components. For those ordinarily skilled in the art, the specific meanings of the above terms in the embodiments of this disclosure can be understood according to the specific situations.

As stated in the background art of this disclosure, due to the low reserves and high consumption of lithium resources, at present, relevant researches have shown that sodium ion batteries are expected to be applied in the field of energy storage in place of lithium ion batteries. However, due to the large ion radius of sodium ions, the charge-discharge deintercalation is difficult. In addition, the cycle life of the existing sodium ion batteries is generally short. Therefore, it is urgent to provide a sodium ion battery that combines good energy density and cycle life so as to broaden the application fields of sodium ion batteries.

In order to solve the technical problems of short cycle life and low energy density of sodium ion batteries, this disclosure provides a nickel-manganese-based sodium ion battery cathode material and a preparation method thereof, a cathode sheet as well as a sodium ion battery, wherein, by regulating the stoichiometric ratio of the elements in the nickel-manganese-based sodium ion battery cathode material and the structure thereof, the energy density and cycle life of the nickel-manganese-based sodium ion battery cathode material can be effectively improved, and the electrochemical performance of the cathode sheet and secondary batteries can also be enhanced.

In a first aspect, the embodiments of this disclosure provide a nickel-manganese-based sodium ion battery cathode material, wherein, it is represented by a general formula of Na_{c}NiₐMn_{b}O₂, where, a+b=1.0, 0.4≤a≤0.6, 0.4≤b≤0.6, 0.67≤c≤1.0; the above nickel-manganese-based sodium ion battery cathode material is secondary particles formed of the stacking of primary particles, wherein the primary particles are sheet-like particles, and the secondary particles are spherical particles; and the nickel-manganese-based sodium ion battery cathode material has a specific discharge capacity of ≥115 mAh•g⁻¹.

In the description of the embodiments of this disclosure, the term "stoichiometric ratio" refers to the ratio of coefficients of different chemical elements in the general formula.

Nickel-manganese-based sodium ion battery cathode materials have become the current research and development hotspots, wherein the presence of nickel element helps to improve the theoretical capacity and conductivity of the material, while the manganese element can provide good ion transport performance and high cycle stability. By making the above limitations on the stoichiometric ratio of the nickel-manganese-based sodium ion battery cathode materials, their comprehensive electrochemical performance can be improved, making the nickel-manganese-based sodium ion battery cathode materials have good energy density and cycle life. In addition, the morphology of the nickel-manganese-based sodium ion battery cathode materials will also affect their electrochemical performance. The secondary particles formed of the stacking of the sheet-like primary particles have a large specific surface area, a large contact area with the electrolyte, and a high specific capacity, which helps to improve the energy density of the nickel-manganese-based sodium ion battery cathode materials.

Further, in some embodiments, the primary particles have a size to thickness ratio of (2.5-15): 1, and a sheet thickness of 0.1 µm to 1 µm; and/or the D₅₀ particle size of the secondary particles is 3 µm to 5.5 µm.

In the description of the embodiments of this disclosure, the term "size to thickness ratio" refers to the ratio of the length of long side of the externally tangent rectangle of the sheet-like particles to the sheet thickness of the sheet-like particles.

In the technical solutions of the embodiments of this disclosure, the above limitations on the size of the primary and secondary particles are made, on the one hand, it is intended to improve the specific surface area of the cathode material, and on the other hand it is intended to reduce the irreversible capacity. In addition, when the sizes of the primary particles and secondary particles meet the above limitations, they are not easily broken during the sintering process and thus have higher structural integrity, which helps to improve the cycle performance of the nickel-manganese-based sodium ion battery cathode materials.

Further, in some embodiments, the D₅₀ particle size of the secondary particles is 4.2 µm to 5.5 µm.

In the technical solutions of the embodiments of this disclosure, by further optimizing the D₅₀ particle size of the secondary particles, their dispersion becomes better, and it is easier to prepare a uniform slurry, which plays a certain role in improving the cycle stability of the secondary battery made from the nickel-manganese-based sodium ion battery cathode materials.

Further, in some embodiments, the specific surface area of the nickel-manganese-based sodium ion battery cathode material is 35 m²/g to 80 m²/g.

In the technical solutions of the embodiments of this disclosure, by limiting the specific surface area of the nickel-manganese-based sodium ion battery cathode materials, the nickel-manganese-based sodium ion battery cathode materials can have both good energy density and cycle stability.

In a second aspect, the disclosure provides a preparation method of a nickel-manganese-based sodium ion battery cathode material, comprising the following steps:
mixing a first complexing agent, a first alkaline substance and water to prepare a mixed solution, wherein the mixed solution is an aqueous solution having an alkalinity of 40 mmol/L to 60 mmol/L and a pH value of 10 to 11;
adding a nickel salt, a manganese salt, a second complexing agent, and a second alkaline substance to above mixed solution for a first coprecipitation reaction, controlling an alkalinity of the reaction system for the first coprecipitation reaction to be 40 mmol/L to 60 mmol/L, and a pH value to be 10 to 11, thereby obtaining a first reaction slurry;
adding a second complexing agent and a second alkaline substance to the first reaction slurry, adjusting an alkalinity of the first reaction slurry to be 60 mmol/L to 100 mmol/L and a pH value to be 11 to 12 for a second coprecipitation reaction, controlling an alkalinity of the reaction system of the second coprecipitation reaction to be 60 mmol/L to 100 mmol/L and a pH value to be 11 to 12, thereby obtaining the nickel-manganese-layered hydroxide precursor;
mixing and calcining the nickel-manganese-layered hydroxide precursor with a sodium source to obtain the nickel-manganese-based sodium ion battery cathode material;
wherein, the alkalinity of the reaction system of the first coprecipitation reaction is lower than that of the reaction system of the second coprecipitation reaction, the pH value of the reaction system of the first coprecipitation reaction is lower than that of the reaction system of the second coprecipitation reaction, and the reaction time of the first coprecipitation reaction is 10 to 40 minutes, and the reaction time of the second coprecipitation reaction is 24 to 48 hours.

In the description of the embodiments of this disclosure, the term "alkalinity" refers to the ability to absorb protons in water, as tested by acid titration method.

In the technical solutions of the embodiments of this disclosure, by adjusting the alkalinity and pH value to control the growth orientation of particles, in the first coprecipitation reaction, i.e. nucleation stage, by making the above limitations on the alkalinity and pH value can promote the growth of crystal plane (010), which is conducive to the formation of sheet-like crystal nuclei with large crystal planes, and in the second coprecipitation reaction, i.e. growth stage, by making the above limitations on the alkalinity and pH value is conducive to the stacking of the primary particles in the direction of crystal plane (101), thereby synthesizing the secondary particles that are conducive to sodium ion transport and are formed of the stacking of the primary particles with high size to thickness ratio.

Further, in some embodiments, oxygen is discharged from the aqueous solution before the first coprecipitation reaction; in addition, the first coprecipitation reaction and the second coprecipitation reaction are carried out under the protection of an inert gas to improve the purity of the products.

Further, in some embodiments, a reaction temperature of the first coprecipitation reaction and the second coprecipitation reaction are 30 °C to 60 °C; and/or, the first coprecipitation reaction and the second coprecipitation reaction are carried out under a stirring condition of 400 rpm to 1000 rpm.

In the technical solutions of the embodiments of this disclosure, by making the above limitations on the reaction temperature can increase the reaction activity of the raw materials and improve the reaction rate on the one hand, and on the other hand, the reaction rate will not be too fast, making it easier to control the nucleation and growth processes, enabling the reaction to proceed quickly and smoothly. Since the stirring rate can affect the collision frequency of reactants, by making the above limitations on the stirring rate, on the one hand, the collision frequency of reactants is moderate, resulting in relatively fast reaction rate, and on the other hand, the nucleation and growth processes are highly controllable, which can form the secondary particles from the primary particles with a moderate sheet thickness and a moderate size to thickness ratio, ensuring that the nickel-manganese-based sodium ion battery cathode materials have good mechanical properties while also exhibiting good electrochemical performance.

Further, in some embodiments, the alkalinity and pH value of the reaction systems of the first coprecipitation reaction and the second coprecipitation reaction are controlled by adjusting the usage amount of the second complexing agent and the alkaline substances.

In the technical solutions of the embodiments of this disclosure, the control of growth orientation during the nucleation and growth stages can be achieved by simply adjusting the usage amount of the second complexing agent and the second alkaline substance.

Further, in some embodiments, after the second coprecipitation reaction is completed, the nickel-manganese-layered hydroxide precursor is obtained by concentration, washing, and drying.

Further, in some embodiments, conditions of the calcination are as follows: heating to 400 °C-600 °C and holding for 4 hours to 6 hours, then heating to 700 °C-900 °C and holding for 10 hours to 25 hours.

**In** the technical solutions of the embodiments of this disclosure, the two-stage heating can uniformly heat the interior of the precursor, reducing the thermal stress, so that the nickel-manganese-based sodium ion battery cathode materials with certain mechanical properties can be generated, which helps to improve the cycle stability of the cathode materials.

Further, in some embodiments, the nickel salt is at least one of nickel sulfate, nickel nitrate, and nickel chloride; the manganese salt is at least one of manganese sulfate, manganese nitrate, and manganese chloride; the first and the second complexing agents are each independently at least one of ammonia, nitrilotriacetic acid, and ethylenediamine tetraacetic acid; the first and the second alkaline substances are each independently at least one of sodium hydroxide, and potassium hydroxide; and the sodium source is at least one of sodium hydroxide, sodium carbonate, and sodium nitrate.

In the technical solutions of the embodiments of this disclosure, the nickel salt, manganese salt, complexing agents, alkaline substances, and sodium source can commercially available, with a wide range of sources.

Further, in some embodiments, a mole ratio of nickel element to manganese element in the nickel salt and the manganese salt is (4-6): (4-6); and a mole ratio of sum of nickel element and manganese element in the nickel-manganese-layered hydroxide precursor to the amount of substance of sodium element in the sodium source is 1: (0.67-1.05).

In the technical solutions of the embodiments of this disclosure, the nickel element functions to provide the skeleton during the crystal formation. By making the above limitations on the mole ratio of nickel element to manganese element and the mole ratio of sum of nickel and manganese element to sodium element, it helps to improve the cycle stability of the batteries. Excessive content of nickel element can affect the production costs, and since the sodium element has the function of providing sodium ions, if its usage amount is too low, the energy density of the batteries will decrease, while if the content of the sodium element is too high, it will produce impurity phases, leading to a decreased specific charge and discharge capacity, and moreover the residual alkali will also increase, resulting in increased roughness of the sodium ion battery cathode material and thus affecting the processing performance.

Further, in some embodiments, the first and the second complexing agents are ammonia, and the first and the second alkaline substances are sodium hydroxide.

Further, in some embodiments, the step of adding a nickel salt, a manganese salt, a second complexing agent, and a second alkaline substance to the mixed solution for a first coprecipitation reaction to obtain a first reaction slurry comprises:
mixing the nickel salt and the manganese salt with water to obtain a nickel-manganese binary salt solution, mixing the second complexing agent with water to obtain a complexing agent solution, and mixing the second alkaline substance with water to obtain an alkaline solution;
adding the above nickel-manganese binary salt solution, the complexing agent solution, and the alkaline solution to the mixed solution for a first coprecipitation reaction to obtain a first reaction slurry;
wherein, a solubility of metal ions in the nickel-manganese binary salt solution is 1.5 mol/L to 2.5 mol/L; a concentration of NH₃•H₂O in the complexing agent solution is 2 mol/L to 6 mol/L; and a concentration of alkaline substances in the alkaline solution is 3 mol/L to 5 mol/L.

In addition, in the mixed solution, the volume ratio of ammonia to water is 1: (3-13); and the ammonia is concentrated ammonia.

In the embodiments, by making limitations on the composition of the mixed solution, the composition of the complexing agent solution and alkaline solution helps to regulate the alkalinity and pH value of the reaction system. The concentration of metal ions in the nickel-manganese binary salt solution has a significant impact on the reaction rate, by controlling it within the above range can make the reaction smoothly proceed and generate uniform nickel-manganese-based sodium ion battery cathode material.

In some embodiments, during the first coprecipitation reaction, an addition rate of the alkaline solution is 0.1 mL/min to 0.4 mL/min, and an addition rate of the complexing agent solution is 0.2 mL/min to 0.4 mL/min; during the second coprecipitation reaction, an addition rate of the alkaline solution is 0.4 mL/min to 0.6 mL/min, and an addition rate of the complexing agent solution is 0.4 mL/min to 0.8 mL/min; and during the first and the second coprecipitation reactions, an addition rate of the nickel-manganese binary salt solution is 0.3 mL/min to 1 mL/min.

In the technical solutions of the embodiments of this disclosure, by making the above limitations on the addition rates of different solutions can result in the product of the first coprecipitation reaction being sheet-like particles, and the product of the second coprecipitation reaction being spherical secondary particles formed of the stacking of the sheet-like primary particles.

In a third aspect, the embodiments of this disclosure provide a cathode sheet comprising a current collector and a cathode material located at one or both sides of the current collector, a conductive agent, and a binder, and the cathode material is the nickel-manganese-based sodium ion battery cathode material provided in the first aspect of this disclosure, and thus it has good cycle performance and energy density.

In a fourth aspect, the embodiments of this disclosure provide a sodium ion battery comprising the cathode sheet of the third aspect of this disclosure, and thus it has good electrochemical performance and good application prospects.

Some specific embodiments are listed below. It should be noted that the embodiments described below are exemplary and are only intended to explain this disclosure, which cannot be understood as limitations to this disclosure. If no specific technologies or conditions are indicated in the embodiments, the technologies or conditions described in the literatures in the art or the product specification shall be followed. The reagents or instruments used of which the manufacturers are not indicated are conventional products that are commercially available.

### I. Preparation methods

The ammonia used in the embodiments and comparative embodiments was concentrated ammonia with a mass fraction of NH₃•H₂O ranging from 25% to 28%.

Alkalinity testing method: the phenolphthalein alkalinity titration method was used. 20 mL specimen was taken at regular intervals during the reaction, and after standing still, the supernatant was separated, then 2 to 3 drops of phenolphthalein were added thereto, and the solution turned red at this point, which was titrated with a standard 0.010 mol/L of hydrochloric acid solution at room temperature of 25 °C until the solution just turned colorless.

pH value testing method: the pH value was monitored in real-time during the reaction using a Rex pH meter, it was needed to be calibrated in standard solutions with pH values of 6.86 and 9.18, respectively at room temperature of 25 °C before use.

### Embodiment 1

An embodiment of the nickel-manganese-based sodium ion battery cathode material in this disclosure, and the preparation method of which was as follows:
S1, preparing a nickel-manganese binary salt solution with a mole ratio of nickel element to manganese element of 1:1.01, wherein the total concentration of metal ions in the nickel-manganese binary salt solution was 2 mol/L; preparing a sodium hydroxide solution with a concentration of sodium hydroxide of 5 mol/L; preparing an ammonia aqueous solution with a concentration of NH₃•H₂O of 6mol/L; wherein the solvents for the above solutions were all water;
S2, adding deionized water to a reactor at a volume accounting for 36% of the total volume of the reactor, heating the reactor to 50 °C, and then stirring at a speed of 600 rpm, after which introducing high-purity nitrogen into the reactor for 30 minutes to remove the oxygen from the reactor; adding concentrated ammonia to the reactor at a volume accounting for 5.12% of the total volume of the reactor, and again dropwise adding sodium hydroxide solution therein to obtain an aqueous solution with an alkalinity of 45 mmol/L to 55 mmol/L and a pH value of 10.4 to 10.8;
S3, introducing the above nickel-manganese binary salt solution, the sodium hydroxide solution and the ammonia aqueous solution into the reactor at the same time for the first coprecipitation reaction, wherein the feeding rate of the nickel-manganese binary salt solution was maintained at 0.5 mL/min, the feeding rate of the sodium hydroxide solution was 0.25 mL/min, and the feeding rate of the ammonia aqueous solution was 0.3 mL/min; during the first coprecipitation reaction, the alkalinity was maintained at 45 mmol/L to 55 mmol/L, the pH value was maintained at 10.4 to 10.8, and the reaction was carried out for 30 minutes;
S4, introducing the above nickel-manganese binary salt solution, the sodium hydroxide solution and the ammonia aqueous solution into the reactor at the same time for the second coprecipitation reaction, wherein the feeding rate of the nickel-manganese binary salt solution was maintained at 0.4 mL/min, the feeding rate of the sodium hydroxide solution was 0.45 mL/min, and the feeding rate of the ammonia aqueous solution was 0.4 mL/min; during the second coprecipitation reaction, the alkalinity was maintained at 70 mmol/L to 90 mmol/L, the pH value was maintained at 11.3 to 11.7, and the reaction was carried out for 36 hours, concentrating the reaction products, then washing with deionized water, and finally drying at 110 °C for 24 hours to obtain the nickel-manganese-layered hydroxide precursor; and
S5, mixing the nickel-manganese-layered hydroxide precursor with sodium hydroxide, wherein the mole ratio of sum of nickel element and manganese element to sodium element was 1:1, then grinding same and placing in a tubular furnace for calcination, heating at a heating rate of 5 °C/min to 500 °C and holding for 6 hours, then heating at a heating rate of 5 °C/min to 750 °C and holding for 20 hours, continuously introducing oxygen throughout the calcination process, and then cooling down to room temperature to obtain the nickel-manganese-based sodium ion battery cathode material.

### Embodiments 2 to 3

Embodiments of the nickel-manganese-based sodium ion battery cathode material in this disclosure, and the difference between the preparation methods thereof and embodiment 1 only lied in that the feeding rates of the sodium hydroxide solution and ammonia aqueous solution were different during the first and the second coprecipitation reactions, which are specifically shown in Table 1.

### Embodiments 4 to 5

Embodiments of the nickel-manganese-based sodium ion battery cathode material in this disclosure, and the difference between the preparation methods thereof and embodiment 1 only lied in that the reaction times were different during the first and the second coprecipitation reactions, which are specifically shown in Table 1.

### Comparative embodiment 1

Comparative embodiment 1 was an embodiment of a nickel-manganese-based sodium ion battery cathode material, and the difference between the preparation method thereof and embodiment 1 only lied in that in S2, adding concentrated ammonia to the reactor at a volume accounting for 8.3% of the volume of the reactor, and again dropwise adding sodium hydroxide solution therein to obtain an aqueous solution with an alkalinity of 70 mmol/L to 90 mmol/L and a pH value of 11.3 to 11.7.

### Comparative embodiment 2

Comparative embodiment 2 was an embodiment of a nickel-manganese-based sodium ion battery cathode material, and the difference between the preparation method thereof and embodiment 1 only lied in that the feeding rates of the sodium hydroxide solution and ammonia aqueous solution and the reaction times were different during the first and the second coprecipitation reactions, which are specifically shown in Table 1.

**Table 1**

| Items | | embodiment 1 | embodiment 2 | embodiment 3 | embodiment 4 | embodiment 5 | Compa rative embodiment 1 | Compa rative embodiment 2 |
|---|---|---|---|---|---|---|---|---|
| First c o pr e ci pi ta ti o n re a ct io n | Feeding rate of alkaline solution (mL/min) | 0.25 | 0.35 | 0.2 | 0.25 | 0.25 | 0.25 | 0.25 |
| | Feeding rate of ammonia aqueous solution (mL/min) | 0.3 | 0.3 | 0.25 | 0.3 | 0.3 | 0.3 | 0.3 |
| | Reaction time (min) | 30 | 30 | 30 | 10 | 40 | 30 | 30 |
| | Alkalinity (mmol/L) | 45-55 | 55-60 | 40-45 | 45-55 | 45-55 | 70-90 | 45-55 |
| | pH value | 10.4-10.8 | 10.8-11.0 | 10.0-10.4 | 10.4-10.8 | 10.4-10.8 | 11.3-11.7 | 10.4-10.8 |
| S e c o n d c o pr e ci pi ta | Feeding rate of alkaline solution (mL/min) | 0.45 | 0.5 | 0.4 | 0.45 | 0.45 | 0.45 | 0.45 |
| | Feeding rate of ammonia aqueous solution (mL/min) | 0.4 | 0.4 | 0.4 | 0.4 | 0.4 | 0.4 | 0.4 |
| | Reaction | 36 | 36 | 36 | 36 | 24 | 36 | 12 |
| tion reaction | time (hours) | | | | | | | |
| | Alkalinity (mmol/L) | 70-90 | 90-100 | 60-70 | 70-90 | 70-90 | 90-100 | 70-90 |
| | pH value | 11.3-11.7 | 11.7-12.0 | 11.0-11.3 | 11.3-11.7 | 11.3-11.7 | 11.7-12.0 | 11.3-11.7 |

### Embodiments 6 to 7

Embodiments of the nickel-manganese-based sodium ion battery cathode material in this disclosure, and the difference between the preparation methods thereof and embodiment 1 only lied in that the mole ratios of nickel element to manganese element in the nickel-manganese binary salt solution were different; and in embodiment 6, the mole ratio of nickel element to manganese element was 2:3, and in embodiment 7, the mole ratio of nickel element to manganese element was 3:2.

### Embodiments 8 to 9

Embodiments of the nickel-manganese-based sodium ion battery cathode material in this disclosure, and the difference between the preparation methods thereof and embodiment 1 only lied in that in S5, the mole ratios of sum of nickel element and manganese element to sodium element were different; and in embodiment 8, the mole ratio of sum of nickel element and manganese element to sodium element was 1:0.70, and in embodiment 9, the mole ratio of sum of nickel element and manganese element to sodium element was 1:0.84.

### Comparative embodiment 3

Comparative embodiment 3 was an embodiment of a nickel-manganese-based sodium ion battery cathode material, and the difference between the preparation method thereof and embodiment 1 only lied in that the mole ratios of nickel element to manganese element in the nickel-manganese binary salt solution were different, and the mole ratio of nickel element to manganese element thereof was 0.3:0.7.

### Comparative embodiment 4

Comparative embodiment 4 was an embodiment of a nickel-manganese-based sodium ion battery cathode material, and the difference between the preparation method thereof and embodiment 1 only lied in that in S5, the mole ratios of sum of nickel and manganese elements to sodium element were different; and the mole ratio of sum of nickel and manganese elements to sodium element thereof was 1:1.16.

### II. Testing methods

1. Morphological testing: the morphology was tested using a field emission scanning electron microscope, Model: MERLIN Compact, with a magnification of 50k-fold.
2. Compact density testing: the determination of the powder compact density was carried out with reference to GB/T 24533;
3. Specific surface area testing: the specific surface area of solid substances was determined with reference to GB/T 19587 "Gas Adsorption BET Method".
4. Electrochemical performance testing: the nickel-manganese-based sodium ion battery cathode materials in embodiments and Comparative embodiments were assembled respectively into button batteries for the electrochemical performance testing, and the assembly and testing methods were as follows:
   (1) preparation of cathode sheet: mixing the cathode material, the conductive carbon black, and polyvinylidene fluoride (PVDF) in a mass ratio of 87:5:8, and adding N-methylpyrrolidone (NMP) with a solid-liquid ratio of 65:35 to form a uniform electrode slurry, then, evenly coating the electrode slurry onto an aluminum foil, vacuum drying same, and then cutting into a circular electrode sheet, and immediately transferring into a glovebox for later use.
   (2) Battery assembly: using metallic sodium as the counter electrode, glass fiber as the separator, sodium perchlorate as the solute of the electrolyte, and propylene carbonate, ethylene carbonate, and fluoroethylene carbonate (in a volume ratio of 1:1:0.05) as the solvent of the electrolyte, where the concentration of sodium perchlorate in the electrolyte was 1 mol/L, and assembling the above substances into the CR2032 button battery, with the entire assembly process being carried out in a glovebox filled with argon. After standing still for 6 hours, the button battery was used for the subsequent electrochemical performance testing.
   (3) Using a constant current charge and discharge mode, performing the charge and discharge tests at a current density of 0.1C, wherein the charging cut-off voltage was 4.0 V and the discharging cut-off voltage was 2.0 V, and the results of the specific discharge capacity test were recorded in Table 2. After three charge and discharge tests at a current density of 0.1C, 100 charge and discharge cycles were conducted at a current density of 1C, and the capacity retention rate η after 100 cycles at 1C was obtained by dividing the specific discharge capacity of the 103rd test by the specific discharge capacity of the 4th test, and the results were recorded in Table 2.

### III. Analysis of Test Results of embodiments and Comparative embodiments

Compact densities of cathode materials in the embodiments and Comparative embodiments and the test results of electrochemical performance of button batteries made from the cathode materials were recorded in Table 2.

**Table 2**

| Items | Cathode materials | | | | | | Batteries | |
|---|---|---|---|---|---|---|---|---|
| | Mole ratio of elements (Ni:Mn:Na ) | Primary particles | | Secondary particles | Compact density | Specific surface area | Specific discharge capacity | η (%) |
| | | Size to thick ness ratio | Sheet thick ness (µm) | D₅₀ particle size (µm) | (g/m²) | (m²/g) | (mAh•g⁻¹) | |
| emb odim ent 1: | 0.5:0.5:1 | 4 | 0.125 | 5.404 | 3.237 | 5.85 | 136.43 | 73.15 |
| emb odim ent 2: | 0.5:0.5:1 | 5.384 | 0.16 25 | 4.552 | 3.124 | 5.4 | 133.4 | 65.75 |
| emb odim ent 3: | 0.5:0.5:1 | 8.125 | 0.2 | 5.226 | 3.015 | 4.28 | 125.35 | 68.27 |
| emb odim ent 4: | 0.5:0.5:1 | 10 | 0.1875 | 4.914 | 3.042 | 5.01 | 128.69 | 72.95 |
| emb odim ent 5: | 0.5:0.5:1 | 6.5 | 0.25 | 3.198 | 3.185 | 5.6 | 135.93 | 61.05 |
| emb odim ent 6: | 0.4:0.6:1 | 5 | 0.25 | 4.552 | 2.683 | 3.78 | 118.12 | 72.55 |
| emb odim ent 7: | 0.6:0.4:1 | 2.5 | 0.375 | 4.636 | 2.58 | 3.46 | 117.09 | 63.54 |
| emb odim ent 8: | 0.5:0.5:0.67 | 4 | 0.25 | 4.287 | 2.32 | 3.17 | 115.54 | 82.35 |
| emb odim ent 9: | 0.5:0.5:0.8 | 3.74 | 0.5 | 4.538 | 2.21 | 3.22 | 115.73 | 80.56 |
| Com para tive emb odim ent 1 | 0.5:0.5:1 | 12 | 0.1 | 5.523 | 2.337 | 1.98 | 110.24 | 65.21 |
| Com para tive emb odim ent 2 | 0.5:0.5:1 | 4 | 0.25 | 2.421 | 2.403 | 1.73 | 112.53 | 63.35 |
| Com para tive emb odim ent 3 | 0.3:0.7:1 | 2.7 | 0.125 | 2.59 | 2.061 | 1.43 | 105.62 | 68.73 |
| Com para | 0.5:0.5:1.1 | 3.56 | 0.7 | 4.832 | 2.358 | 1.87 | 110.78 | 55.39 |
| tive emb odim ent 4 | | | | | | | | |

It could be seen from Table 2 that the batteries made from the nickel-manganese-based sodium ion battery cathode materials in the embodiments of this disclosure had a relatively high specific discharge capacity and capacity retention rate, and the specific discharge capacity thereof could reach 115mAh•g⁻¹ or more, which helped to improve the energy density. In addition, the capacity retention rate thereof was relatively high, reaching 60% or more, making them have good cycle performance.

The alkalinity and pH value during the first coprecipitation reaction in Comparative embodiment 1 were too high, resulting in a lower specific discharge capacity; and the duration of the second coprecipitation reaction in Comparative embodiment 2 was short, also resulting in a lower specific discharge capacity; the mole ratio of nickel element to manganese element in Comparative embodiment 3 was small, resulting in a significant attenuation in the specific discharge capacity; and the mole ratio of sum of nickel and manganese elements to sodium element in Comparative embodiment 4 was small, resulting in a lower specific discharge capacity and a significant attenuation in the cycle stability.

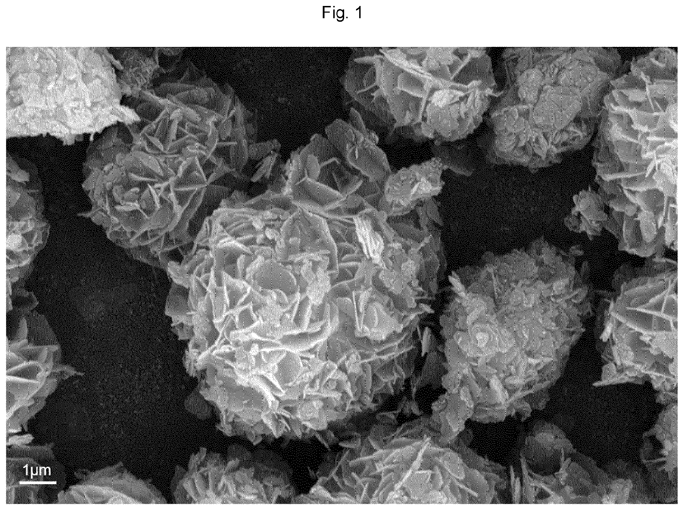

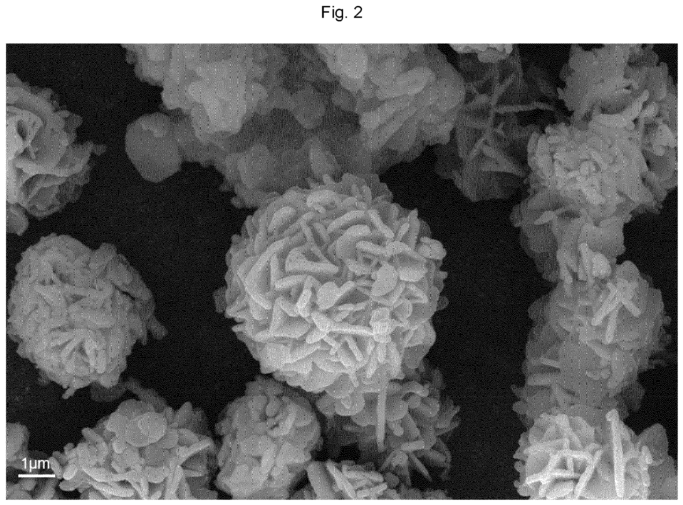

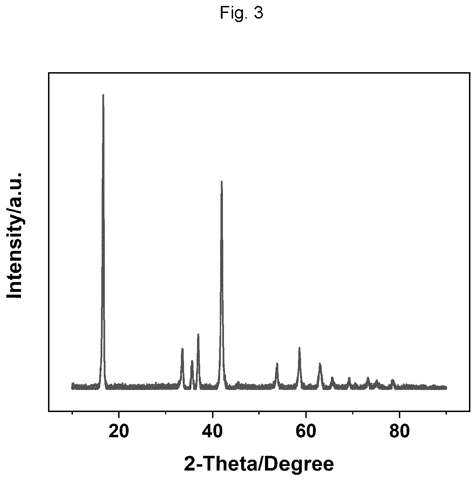

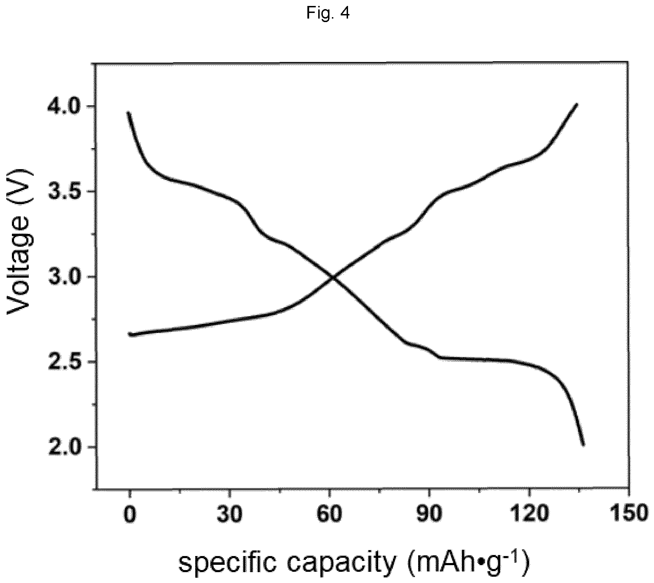

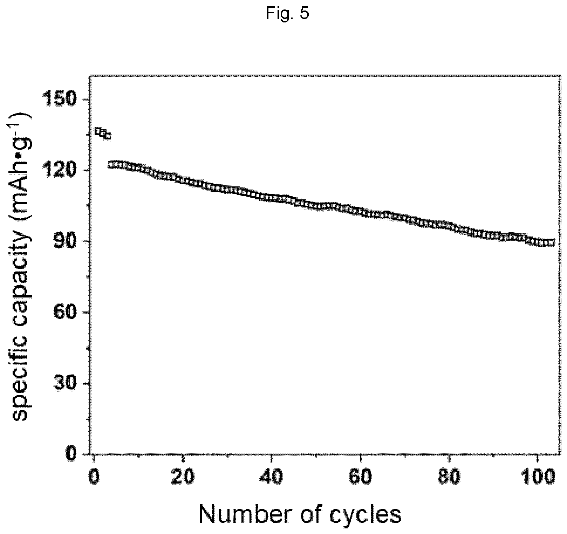

Figure 1 showed the scanning electron microscope image of the nickel-manganese-layered hydroxide precursor in embodiment 1, it could be seen therefrom that they were spherical secondary particles formed of the stacking of the sheet-like primary particles; Figure 2 showed the scanning electron microscope image of the nickel-manganese-based sodium ion battery cathode material in embodiment 1, it could be seen therefrom that they were also spherical secondary particles formed of the stacking of the sheet-like primary particles. It could be seen from the above test results that the primary particles obtained using the method disclosed in this disclosure were flake-shaped, which stacked to form secondary particles. These secondary particles were spherical and served as the cathode material for nickel-manganese sodium-ion batteries. Figure 3 showed the XRD pattern of the nickel-manganese-based sodium ion battery cathode material in embodiment 1 of this disclosure, and it could be seen therefrom that the nickel-manganese-based sodium ion battery cathode material was Na_{c}NiₐMn_{b}O₂, where a=0.5, b=0.5, and c=1. Figure 4 showed the diagram of the initial specific charge-discharge capacity testing of the nickel-manganese-based sodium ion battery cathode material in embodiment 1, and it could be seen therefrom that both the initial specific charge capacity and the initial specific discharge capacity thereof could reach 130 mAh•g⁻¹ or more, which means the energy density was high. Figure 5 showed the diagram of the cycle performance testing of the nickel-manganese-based sodium ion battery cathode material in embodiment 1, and it could be seen therefrom that the cycle stability thereof was relatively good, and the capacity retention rate after 100 cycles could reach 70% or more.

It should be noted that this disclosure is not limited to the aforementioned embodiments. The above embodiments are only illustrative, and embodiments that have the substantially same composition and play the same acting role as the technical idea within the scope of technical solution of this disclosure are all included in the technical scope of this disclosure. In addition, other embodiments constructed by applying various variations that can be thought of by those skilled in the art and by combining some constituent elements of the embodiments without departing from the scope of the main idea of this disclosure are also included in the scope of this disclosure.

## Claims

1. A nickel-manganese-based sodium ion battery cathode material, wherein, it is represented by a general formula of Na_{c}NiₐMn_{b}O₂, where, a+b=1.0, 0.4≤a≤0.6, 0.4≤b≤0.6, 0.67≤c≤1.0; the nickel-manganese-based sodium ion battery cathode material is secondary particles formed of the stacking of primary particles, wherein the primary particles are sheet-like particles, and the secondary particles are spherical particles, and the nickel-manganese-based sodium ion battery cathode material has a specific discharge capacity of ≥115 mAh•g⁻¹.

2. The nickel-manganese-based sodium ion battery cathode material of claim 1, wherein, the primary particles have a size to thickness ratio of (2.5-15): 1, and a sheet thickness of 0.1 µm to 1 µm; and/or
the D₅₀ particle size of the secondary particles is 3 µm to 5.5 µm.

3. The nickel-manganese-based sodium ion battery cathode material of claim 1 or 2, wherein, the specific surface area of the nickel-manganese-based sodium ion battery cathode material is 35 m²/g to 80 m²/g.

4. A preparation method of the nickel-manganese-based sodium ion battery cathode material of any one of claims 1 to 3, wherein, it comprises the following steps:
mixing a first complexing agent with a first alkaline substance and water to prepare a mixed solution, wherein the mixed solution has an alkalinity of 40 mmol/L to 60 mmol/L, and a pH value of 10 to 11;
adding a nickel salt, a manganese salt, a second complexing agent, and a second alkaline substance to the mixed solution for a first coprecipitation reaction, controlling an alkalinity of the reaction system for the first coprecipitation reaction to be 40 mmol/L to 60 mmol/L, and a pH value to be 10 to 11, thereby obtaining a first reaction slurry;
adding the second complexing agent and the second alkaline substance to the first reaction slurry, adjusting an alkalinity of the first reaction slurry to be 60 mmol/L to 100 mmol/L and a pH value to be 11 to 12 for a second coprecipitation reaction, controlling an alkalinity of the reaction system of the second coprecipitation reaction to be 60 mmol/L to 100 mmol/L and a pH value to be 11 to 12, thereby obtaining the nickel-manganese-layered hydroxide precursor;
mixing and calcining the nickel-manganese-layered hydroxide precursor with a sodium source to obtain the nickel-manganese-based sodium ion battery cathode material;
wherein, the alkalinity of the reaction system of the first coprecipitation reaction is lower than that of the reaction system of the second coprecipitation reaction, the pH value of the reaction system of the first coprecipitation reaction is lower than that of the reaction system of the second coprecipitation reaction, and the reaction time of the first coprecipitation reaction is 10 to 40 minutes, and the reaction time of the second coprecipitation reaction is 24 to 48 hours.

5. The preparation method of claim 4, wherein,
a reaction temperature of the first coprecipitation reaction and the second coprecipitation reaction are 30 °C to 60 °C; and/or
the first coprecipitation reaction and the second coprecipitation reaction are carried out under a stirring condition of 400 rpm to 1000 rpm; and/or
conditions of the calcination are as follows: heating to 400 °C-600 °C and holding for 4 hours to 6 hours, then heating to 700 °C-900 °C and holding for 10 hours to 25 hours.

6. The preparation method of claim 4 or 5, wherein,
the nickel salt is at least one of nickel sulfate, nickel nitrate, and nickel chloride; and/or the manganese salt is at least one of manganese sulfate, manganese nitrate, and manganese chloride; and/or
the first complexing agent is at least one of ammonia, nitrilotriacetic acid, and ethylenediamine tetraacetic acid; and/or
the second complexing agent is at least one of ammonia, nitrilotriacetic acid, and ethylenediamine tetraacetic acid; and/or
the first alkaline substance is at least one of sodium hydroxide, and potassium hydroxide; and/or
the second alkaline substance is at least one of sodium hydroxide, and potassium hydroxide; and/or
the sodium source is at least one of sodium hydroxide, sodium carbonate, and sodium nitrate; and/or
a mole ratio of nickel element to manganese element in the nickel salt and the manganese salt is (4-6): (4-6); and/or
a mole ratio of sum of nickel element and manganese element in the nickel-manganese-layered hydroxide precursor to sodium element in the sodium source is 1: (0.67-1.05).

7. The preparation method of claim 6, wherein, the step of adding a nickel salt, a manganese salt, a second complexing agent, and a second alkaline substance to the mixed solution for a first coprecipitation reaction to obtain a first reaction slurry comprises:
mixing the nickel salt and the manganese salt with water to obtain a nickel-manganese binary salt solution, mixing the second complexing agent with water to obtain a complexing agent solution, and mixing the second alkaline substance with water to obtain an alkaline solution;
adding the nickel-manganese binary salt solution, the complexing agent solution, and the alkaline solution to the mixed solution for a first coprecipitation reaction to obtain a first reaction slurry;
wherein, a solubility of metal ions in the nickel-manganese binary salt solution is 1.5 mol/L to 2.5 mol/L; a concentration of NH₃•H₂O in the complexing agent solution is 2 mol/L to 6 mol/L; and a concentration of alkaline substances in the alkaline solution is 3 mol/L to 5 mol/L.

8. The preparation method of claim 7, wherein,
during the first coprecipitation reaction process, an addition rate of the alkaline solution is 0.1 mL/min to 0.4 mL/min, and an addition rate of the complexing agent solution is 0.2 mL/min to 0.4 mL/min;
during the second coprecipitation reaction process, an addition rate of the alkaline solution is 0.4 mL/min to 0.6 mL/min, and an addition rate of the complexing agent solution is 0.4 mL/min to 0.8 mL/min; and
during the first and the second coprecipitation reactions, an addition rate of the nickel-manganese binary salt solution is 0.3 mL/min to 1 mL/min.

9. A cathode sheet, wherein, it comprises a current collector and a cathode material located at one or both sides of the current collector, a conductive agent, and a binder, and the cathode material is the cathode material of any one of claims 1 to 3 or the cathode material prepared by the preparation method of any one of claims 4 to 8.

10. A sodium ion battery, wherein, it comprises the cathode sheet of claim 9.
